# EUROPÄISCHE PATENTSCHRIFT

(11) **EP 1 520 461 B1**
(45) Veröffentlichungstag und Bekanntmachung des Hinweises auf die Patenterteilung: **11.01.2017**
(21) Anmeldenummer: 04021757.2
(22) Anmeldetag: 14.09.2004
(51) Int. Cl.: A01B 69/00

(54) **Transformationsvorrichtung innerhalb einer landwirtschaftlichen Maschine**
Transformation device within an agricultural machine
Dispositif de transformation à l'intérieur d'une machine agricole

(30) Priorität: 02.10.2003 DE 10346457
(43) Veröffentlichungstag der Anmeldung: 06.04.2005
(73) Patentinhaber: CLAAS Selbstfahrende Erntemaschinen GmbH, 33428 Harsewinkel (DE)
(72) Erfinder: Brunnert, Andreas, 33129 Dellbrück (DE); Huster, Jochen, 33330 Gütersloh (DE); Diekhans, Norbert, 33335 Gütersloh (DE)

(56) Entgegenhaltungen:
- EP-A- 1 266 552
- EP-A- 1 332 659
- FR-A- 1 497 945
- US-A- 6 101 795
- US-B1- 6 336 051
- US-B1- 6 385 515

## Beschreibung

Die Erfindung betrifft ein Verfahren zur Transformation verschieden strukturierter Signale unterschiedlicher Spurführungssysteme zur selbsttätigen Ansteuerung einer Lenkvorrichtung in einer landwirtschaftlichen Arbeitsmaschine sowie eine Vorrichtung zur Durchführung des Verfahrens.

Unterschiedliche Spurführungssysteme für landwirtschaftliche Maschinen werden von verschiedenen Herstellern angeboten. Diese Spurführungssysteme sind teilweise als fester Bestandteil in eine landwirtsohaftliche Arbeitsmaschine Integriert. Andererseits sind nicht alle Landmaschinen mit Spurführungssystemen ausgestattet. Hiervon sind insbesondere ältere Modelle betroffen. Es besteht daher ein praktisches Bedürfnis, Landmaschinen ohne spurführungssystem, mit einem frei wählbaren Spurführungssystem auszustatten sowie bereits In Landmaschinen vorhandene Spurführungssysteme durch weitere Spurführungssysteme zu ergänzen um so die Genauigkeit der Spurführung zu erhöhen.

Die EP-1 266 553 A2 offenbart eine Einrichtung zur selbsttätigen Lenkung eines landwirtschaftlichen Arbeitsfahrzeuges, mit einer Steuerungseinrichtung, die mit einem ersten Positionssignal und einem zweiten Positionssignal beaufschlagt wird, sowie einer Sollweginformation, die den zurückgelegten Weg definiert Zudem wird aus dem ersten und dem zweiten Positionssignal eine Auswahl vorgenommen, die das genaueste Signal ermittelt Aufgrund der ermittelten Daten erfolgt eine selbsttätige Lenkung des landwirtschaftlichen Arbeitsfahrzeuges.

Als ein Positionssignal werden Satellitensignale des Global Positioning System GPS verwendet. Ein weiteres Positionssignal wird durch die Verwendung von Laserabtastsensoren gewonnen. Die Laserabtastsensoren erfassen die relative Lage der Erntegutbestandskante und richten hiernach die Landmaschine aus.

Die in der EP 1 266 553 A2 offengelegte Einrichtung zur Lenkung einer landwirtschaftlichen Arbeitsmaschine setzt jedoch mindestens zwei vorhandene Spurführungssysteme voraus. Nachteilig hieran sind Insbesondere die hohen Kosten, die von dem Erwerber dieser zwei unterschiedlichen Systeme getragen werden müssen. Insbesondere handelt es sich bel dem GPS gestützten Spurführungssystem um ein sehr kostenintensives System. Die Möglichkeit der Verknüpfung älterer Systeme mit der Steuereinheit ist zudem nicht gegeben, so dass das offenbarte System nicht für altere Landmaschinenmodelle zur Anwendung gelangt Die Nachrüstung der schon vorhandenen Systeme Ist nur durch einen kompletten Austausch und der Installation der gegebenenfalls notwendigen Software durchführbar. Diese aufwendige Nachrüstung erfordert zumindest einen Eingriff In das vorhandene Lenksteuerungssystem an jeder nachzurüstenden Landmaschine.

Die US 6,701,785 beschreibt eine automatisch lenkbare Erntemaschine, der Ortungsvorrichtungen zugeordnet sind; die nach unterschiedlichen Wirkprinzipien arbeiten. Die Erntemaschine umfasst einen Regler, dem die Ortungssignale der beiden Ortungsvonrichtungen zugeführt werden. Der Regler wandelt die Ortungssignale mittels eines Implementieren Algorithmus' In ein Ansteuerungasignal für ein Lenkmittel um.

Als nachtellig an diesem System erweist sich, dass der in dem Regler implementierte Algorithmus auf die Ortungssignale der beiden an der Erntemaschine angeordneten Ortungsvorrichtungen festgelegt ist. Käme ein zusätzliches, nach einem weiteren Wirkprinzip arbeitendes Spurführungssystem zum Einsatz, müsste der Algorithmus angepasst werden, um die Signale des neuen Spurführungssystems verarbeiten zu können.

Es ist daher Aufgabe der vorliegenden Erfindung die Nachteil den Standes der Tachnik zu vermeiden und eine vielfältige Einsatzmöglichkeit unterschiedlicher Spurführungssysteme zur selbsttätigen Lenkung einer landwirtschaftlichen Arbeitsmaschine zu ermöglichen.

Diese Aufgabe wird erflndungsgemäß durch die kennzeichnenden Merkmale der Patentansprüche 1 und 5 gelöst, wobei in den weiteren Patentansprüchen Merkmale aufgeführt sind, die diese Lösung in vorteilhafter Weise weiterentwickeln.

Indem eine Transformationsvorrichtung In das bestehende System aus den Spurführungssystemen und der Lenkvorrichtung integriert wird, der die unterschiedlich trukturierten Ausgangssignale zugeführt werden, wobei die Transformationsvorrichtung aus den unterschiedlich strukturierten Eingangssignalen ein einheitliches Ausgangssignal generiert, welches der Lenkeinrichtung zugeführt wird, können Spurführungssysteme unterschiedlicher Ausführung auf allen beliebigen landwirtschaftlichen Arbeitsmaschinen gleichermaßen eingesetzt werden. So können neue Spurführungssystem in Landmaschinen integriert werden, ohne dass es einer aufwendigen Systemanderung bedarf.

Es liegt im Rahmen der Erfindung eine berührungslose Verbindung zwischen den Systemen, der Transformationsvorrichtung und/oder der Lenkeinrichtung herzustellen.

Ferner wird durch die Transformationsvorrichtungen eine neue Möglichkeit des Systemverbundes geschaffen. So wird die Transformationsvorrichtung in ein bestehendes System integriert und erfordert keine Neuanschaffung von weiteren Steuergeräten. Ebenso wird mögliches Funktionspotenzial besser genutzt, da der Fahrer der landwirtschaftlichen Arbeitsmaschine jederzeit die Wahl zwischen dem für den jeweilige Emteeinsatz der Landmaschine geeignetesten Spurführungssystem unter mehreren Spurführungssystemen hat.

Ebenso wird die Diagnosemöglichkeit verbessert, da es im Rahmen der Erfindung denkbar ist, dass alle an die Transformationsvorrichtungen angeschlossenen Systeme sich gegenseitig überwachen und bei einer Fehlfunktion des einen Systems selbsttätig auf ein Ersatzsystem schalten.

Schließlich können weitere Systeme an die Transformationsvorrichtung angeschlossen werden, die ernte- und/oder maschinenspezifische Parameter generieren. So können Daten, wie z.B. die Maschinenneigung, die ebenfalls Auswirkungen auf die Spurführung haben, der Transformationsvorrichtung zugehen, dort umgewandelt und als Korrekturparameter mit in die Lenkung der Landmaschine einfließen.

Weitere vorteilhafte Ausgestaltungen sind Gegenstand weiterer Unteransprüche und werden nachfolgend anhand von Zeichnungen näher erläutert.

Es zeigen:
- Figur 1:: Die schematische Darstellung eines selbstfahrenden Mähdreschers in Draufsicht und erfindungsgemäßer Transformationsvorrichtung
- Figur 2:: Ein Flussdiagramm des erfindungsgemäßen Verfahrens

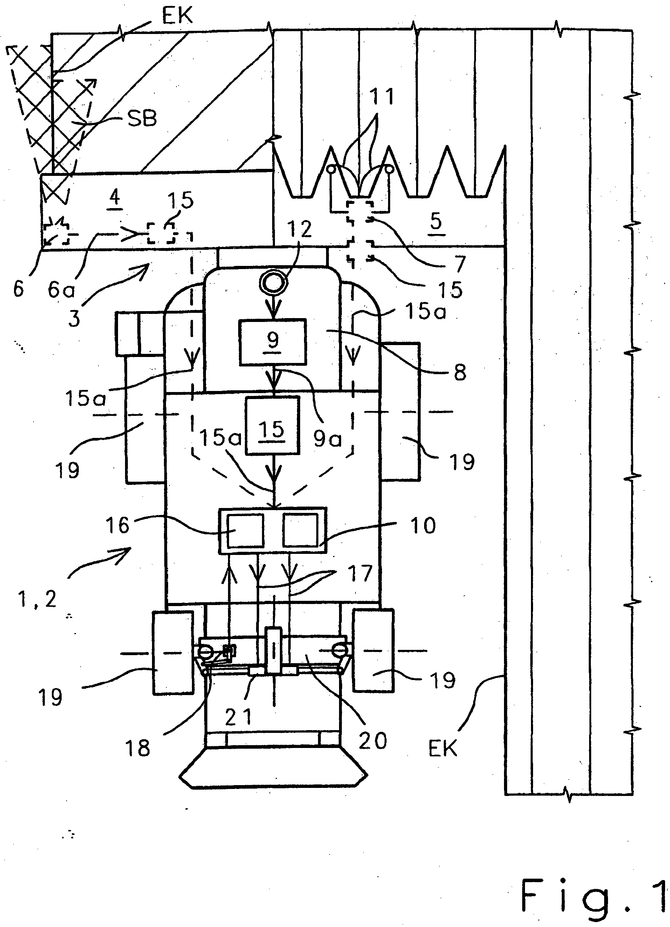

In Figur 1 ist eine landwirtschaftliche Arbeitsmaschine 1 in Form eines selbstfahrenden Mähdreschers 2 in Draufsicht gezeigt Das vorderseitig am Mähdrescher 2 angeordnete Vorsatzgerät 3 kann als Getreideschneidwerk 4 oder als Maispflücker 5 ausgeführt sein. Der Einsatz der unterschiedlichen Vorsatzgeräte 4, 5 ist abhängig von der jeweiligen Erntegutart. An dem Mähdrescher 2 sind unterschiedliche Spurführungssysteme angebracht. In schematischer Darstellung ist an dem Getreideschneidwerk 4 ein allgemein bekanntes Laserspurführungssystem 6, an dem Maispflücker 5 ein allgemein bekannter Maistaster 7 und ein in die Fahrerkabine 8 integriertes GPS gesteuertes Spurführungssystem 9 abgebildet. Mittels des lasergesteuerten Spurführungssystems 6 wird die Erntegutbestandskante EK abgetastet. Dies erfolgt durch von einer Lasereinrichtung generierten Ortungsstrahlen, welche einen Scanbereich SB erfassen und dabei die Erntegutbestandskante EK schwenkend abtasten. Zur Bestimmung der Erntegutkante EK werden reflektierte Ortungsstrahlen zur Auswertung von dem lasergesteuerten Spurführungssystem 6 erfasst. Aufgrund der ermittelten Werte wird ein Signal für eine Lenkungseinrichtung 10 generiert, wodurch sich der Mähdrescher 2 selbsttätig in Abhängigkeit von der bestehenden Emtegutkante EK ausrichtet.

Der an dem Maispflücker 5 angeordnete Maistaster 7 kontaktiert den Erntegutbestand und generiert ein Signal für die Lenkungseinrichtung 10, die die Lenkung des Mähdreschers 2 anhand des auf dem Feld stehenden Ernteguts einleitet.

Mithilfe des Global Positioning Systems GPS kann die Position des Mähdreschers 2 auf dem Feld berechnet werden, wenn die momentane Position des Mähdreschers 2 und die Felddaten wie Breite, Länge und Lage des konkreten Feldes, bekannt sind. Liegen diese Daten vor, wird die Position des Mähdreschers 2 auf dem jeweiligen Feld bestimmt und in Abhängigkeit hiervon die Fahrtroute unabhängig von dem Emtegutbestand berechnet. Die von dem GPS generierten Satellitensignale werden an eine an der Fahrerkabine 8 angeordneten GPS Antenne 12 gesendet, die diese Eingangssignale an ein Spurführungssystem weiterleitet. Anhand der aktuellen Position und der zuvor geplanten Fahrtroute wird ein Signal an die Lenkeinrichtung 10 weitergegeben, wodurch die Lenkachse 20 über einen Lenkzylinder 21 angesteuert wird.

Da diese unterschiedlichen Spurführungssysteme 6, 7. 9 an unterschiedlichen Landmaschinen eingesetzt werden oder teilweise gar kein Bestandteil landwirtschaftlicher Maschinen sind, hat es sich als sinnvoll erwiesen die Landmaschinen mit mindestens einem oder bei bereits bestehenden Spurführungssystemen um wenigstens ein weiteres Spurführungssystem zu ergänzen.

Dies hat den Vorteil, dass etwaige, dem jeweiligen System inhärente Nachteile, durch ein zusätzliches System kompensiert werden können. So hat ein GPS abhängiges Spurführungssystem den Nachteil, dass die Spurführung unabhängig von dem tatsächlich vorhandenen Emtegutbestand vollzogen wird. Das System würde daher auch dann die Emtefahrt fortsetzen, wenn kein Erntegutbestand, beispielsweise aufgrund schlechter Witterungsbedingungen, gegeben ist. Ferner beeinträchtigen äußere Umweltbedingungen wie bedeckter Himmel oder dichter Baumbestand in Feldnähe, die zu einer Abschattung der Satelliten führen - die Funktionalität des GPS gesteuerten Spurführungssystems.

Die Ergänzung bereits bestehender Spurführungssysteme erfolgt mithilfe einer Transformationsvorrichtung 15. Die Transformationsvorrichtung 15 empfängt die Eingangssignale des jeweiligen Spurführungssystems 6, 7, 9. Aus den unterschiedlich strukturierten Eingangssignalen 6a, 7a, 9a transformiert die Transformationsvorrichtung 15 ein einheitliches Ausgangssignal 15. a. Dieses einheitliche Ausgangssignal 15 a wird einer Lenkeinrichtung 10 zugeführt. In der Lenkeinrichtung 10 wird das einheitliche Eingangssignal 15 a von einer Recheneinheit 16 verwertet und ein Ausgangssignal 17 zur selbsttätigen Lenkung des Mähdreschers 2 erzeugt. Zur Kontrolle der Iststellung der Räder kann ein Radwinkelgeber 18 eingesetzt werden, der die tatsächliche Stellung der Reifen 19 der Recheneinheit 16 anzeigt Die Transformationsvorrichtung 15 ist, wie strichliniert dargestellt, jeweils einem Spurführungssystem 6, 7, 9 zugeordnet.

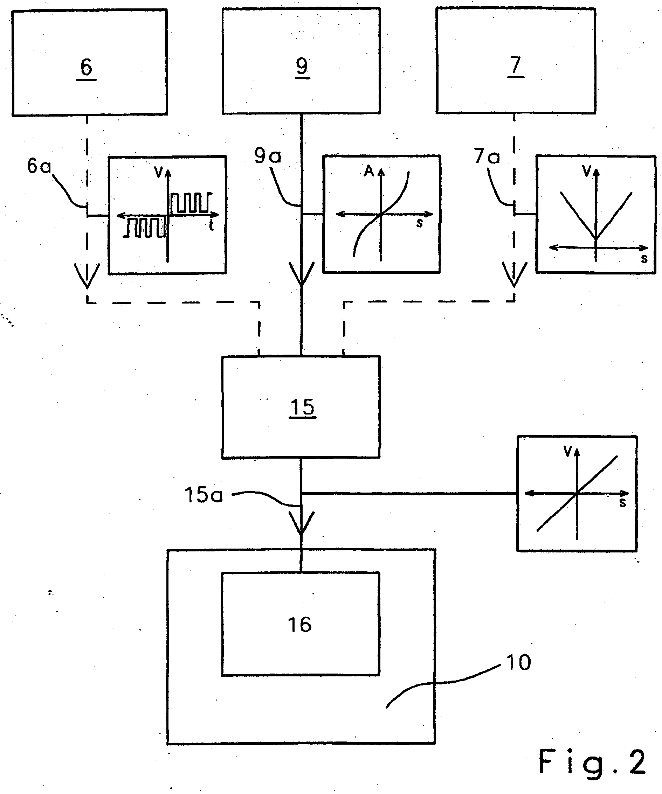

Die Figur 2 zeigt ein Flussdiagramm des erfindungsgemäßen Verfahrens.

Als beispielhafte nicht abschließende Formen von Spurführungssystemen sind das GPS basierende 9, das lasergesteuerte 6 sowie das mechanisch über einen Taster gesteuerte Spurführungssystem 7, als Basisspurführungssystem aufgeführt. Die unterschiedlichen Spurführungssysteme 6, 7, 9 generieren unterschiedlich strukturierte Ausgangssignale 6a, 7a, 9a. Die unterschiedlich strukturierten Ausgangssignale 6a, 7a, 9a sind anhand eines dem jeweiligen Spurführungssystem 6, 7, 9 zugeordneten Diagramms - 9a, 6a, 7a - schematisch dargestellt. Es liegt im Rahmen der Erfindung, die Spurführungssysteme 6, 7, 9 nicht nur auf die vorhandenen Systeme zu beschränken, sondern auf beliebig viele Spurführungssysteme zu erweitern.

Die unterschiedlichen Signale 6a, 7a, 9a werden den erfindungsgemäßen Transformationsvorrichtungen 15 zugeführt. Die Transformationsvorrichtung 15 verarbeitet die unterschiedlich strukturierten Eingangssignale 9a, 6a, 7a und generiert aus den unterschiedlich strukturierten Eingangssignalen 9a, 6a, 7a ein einheitliches Ausgangssignal 15a. Dieses einheitliche Ausgangssignale 15a ist anhand des Diagramms 15a dargestellt. Das einheitliche Ausgangssignal 15a wird einem Recheneinheit 16 zugeführt von wo aus das Ausgangssignal 15a die Lenkung des Mähdreschers 2 ansteuert.

Aufgrund des Zusammenführens unterschiedlich strukturierter Ausgangssignale 9a, 6a, 7a unterschiedlicher Spurführungssysteme 6, 7, 9 in die Transformationsvorrichtung 15 können systemfremde Signale zu einem einheitlichen Signal umgewandelt und von einer bereits vorhandenen Lenkungseinrichtung 10 zur Ausrichtung des Mähdreschers 2 verwendet werden.

In der Praxis kann ein Spurführungssystem gleichen Wirkprinzips von mehreren Herstellern bzw. Anbietern verwendet werden. Da diese Spurführungssysteme unterschiedliche Signale senden, kann im Rahmen der Erfindung eine wirkungsprinzipspezifische Transformationsvorrichtung 15 eingesetzt werden, die die verschiedenen Eingangssignale der auf ein und demselben Wirkprinzip basierenden Spurführungssysteme unterschiedlicher Hersteller in ein einheitliches Ausgangssignal wandelt.

Ebenso können der Transformationsvorrichtung 15 weitere nicht abgebildete Systeme zur Erfassung unterschiedlicher Ernte- oder Maschinenparameter, wie beispielsweise der Neigung der landwirtschaftlichen Maschine 1 auf dem Feld, zugeordnet werden, deren Signale im Sinne der Erfindung erfasst und umgewandelt werden, wodurch weitere Spurführungsungenauigkeiten ausgeglichen werden.

Das erfindungsgemäße Verfahren und die erfindungsgemäße Vorrichtung ist nicht nur auf Mähdrescher, sondern auf jede Art von landwirtschaftlicher Arbeitsmaschine anwendbar.

### Bezugszeichenliste:

- 1: Landwirtschaftliche Arbeitsmaschine
- 2: Mähdrescher
- 3: Vorsatzgerät
- 4: Getreideschneidwerk
- 5: Maispflücker
- 6: Laserspurführungssystem
- 6a: Ausgangssignal Laserspurführung
- 7: Taster System
- 7a: Ausgangssignal Tasterspurführung
- 8: Fahrerkabine
- 9: GPS System
- 9ä: Ausgangssignal GPS Spurführung
- 10: Lenkungseinrichtung
- 12: GPS - Antenne
- 15: Transformationsvorrichtung
- 15a: Ausgangssignal
- 16: Recheneinheit
- 17: Lenksignal
- 18: Radwinkelgeber
- 19: Reifen
- 20: Lenkachse
- 21: Lenkzylinder

- EK: Erntegutbestandskante
- SB: Scannbereich

## Patentansprüche

1. Verfahren zur Transformation verschieden strukturierter Signale (6a, 7a, 9a) unterschiedlicher Spurführungssysteme (6, 7, 9) zur selbsttätigen Ansteuerung einer Lenkvorrichtung (10) in einer landwirtschaftlichen Arbeitsmaschine (1), wobei die Spurführungssysteme (6, 7, 9) nach unterschiedlichen Wirkungsprinzipien arbeiten,
**dadurch (gekennzeichnet,**
dass eine oder mehrere Transformationsvorrichtungen (15) in das bestehende System aus den Spurführungssystemen (6, 7) und der Lenkvorrichtung (10) integriert wirden, den die Verschieden strukturierten Signale (6a, 7a,. 9a) der unterschiedlichen Spurführungssysteme (6, 7, 9) zugeführt werden, wobei die Tränsformationsvorrichtungen (15) aus jedem dieser verschieden strukturierten Eingangssignale (6a, 7a, 9a) ein einheitliches Ausgangssignal (15a) generieren, welches der Lenkeinrichtung (10) zugeführt wird, und wobei jeweils einem Spurführungssystem eine Transformationsvorrichtung zugeordnet ist.

2. Verfahren nach Anspruche 1, **dadurch gekennzeichnet, dass** die der Transformatiönsvorrichtung (15) zugeführten Eingangssignale (6a, 7a, 9a) von wenigstens zwei unterschiedlich strukturierten Spurführungssystemen (6,7) generiert werden

3. verfahren nach einem der Absprüche 1 bis 2, **dadurch gekennzeichnet, dass** das die Wirkungsprinzipien der Spurführungssysteme auf optisch, akustisch, visuell, mechanisch, Ultraschall- und/oder infrarot gesteuerten Prinzipien beruhen.

4. Verfahren nach einem der Ansprüche 1 bis 3, **dadurch gekennzeichnet, dass** die Wirkungsprinzipien der Spurführungssysteme (6, 7, 9) auf lasergesteuerten, GPS gesteuerten oder mechanisch gesteuerten Prinzipien basieren.

5. Vorrichtung mit Transformationsvorrichtungen, zur Durchführung des Verfahrens nach einem der Ansprüche 1 bis 4, **dadurch gekennzeichnet dass** die unterschiedlichen Spurführungssysteme (6, 7, 9), die nach unterschiedlichen Wirkungsprinzipien arbeiten jeweils einer Transformationsvorrichtung (15) zugeordnet sind, die in das bestehende System aud den Spurführungssystemen (6,7) und der Lenkvorrichtung (10) integriert ist, wobei jede Transformationsvorrichtung (15) wenigstens ein zum Ausgangssignal der Transförmationsvorrichtung (15) verschieden strukturiertes Eingangssignal aufnimmt, dieses wenigstens eine verschieden strukturierte Eingangssignal in ein einheitliches Ausgangssignal (15 a) umwandelt und das einheitliche Ausgangssignal (15 a) an eine bereits vorhandene Lenkeinrichtung (10) weitergibt, wobei die Lenkeinrichtung (10) das gewandelte Eingangssignal (15 a) als ein der Lenkeinrichtung (10) zugrundeliegendes bekanntes Lenksignal versteht.

6. Vorrichtung nach Anspruch 5, **dadurch gekennzeichnet; dass** den Spurfuhrungssystemen (6,7,9) gleichen Wirkprinzips jeweils eine Transformationsvorrichtung (15) zugeordnet ist.

## Claims

1. A method of transforming differently structured signals (6a, 7a, 9a) of different track guide systems (6, 7, 9) for automatic actuation of a steering arrangement (10) in an agricultural working machine (1), wherein the track guide systems (6, 7, 9) operate in accordance with different operating principles,
**characterised in that** one or more transformation devices (15) are integrated into the existing system comprising the track guide systems (6, 7) and the steering arrangement (10), to which devices the differently structured signals (6a, 7a, 9a) of the different track guide systems (6, 7, 9) are fed, wherein the transformation devices (15) generate from each of those differently structured input signals (6a, 7a, 9a) a uniform output signal (15a) which is fed to the steering arrangement (10) and wherein a transformation device is associated with a respective track guide system.

2. A method according to claim 1 **characterised in that** the input signals (6a, 7a, 9a) fed to the transformation device (15) are generated by at least two differently structured track guide systems (6, 7).

3. A method according to one of claims 1 and 2 **characterised in that** the operating principles of the track guide systems are based on optically, acoustically, visually, mechanically, ultrasound- and/or infrared-controlled principles.

4. A method according to one of claims 1 to 3 **characterised in that** the operating principles of the track guide systems (6, 7, 9) are based on laser-controlled, GPS-controlled or mechanically controlled principles.

5. An apparatus with transformation devices for carrying out the method according to one of claims 1 to 4 **characterised in that** the different track guide systems (6, 7, 9) which operate in accordance with different operating principles are associated with a respective transformation device (15) which is integrated into the existing system comprising the track guide systems (6, 7) and the steering arrangement (10), wherein each transformation device (15) receives at least one input signal which is differently structured in relation to the output signal of the transformation device (15), transforms said at least one differently structured input signal into a uniform output signal (15a) and passes the uniform output signal (15a) to an already existing steering arrangement (10), wherein the steering arrangement (10) understands the transformed input signal (15a) as a known steering signal on which the steering arrangement (10) is based.

6. Apparatus according to claim 5 **characterised in that** a respective transformation device (15) is associated with the track guide systems (6, 7, 9) involving the same operating principle.

## Revendications

1. Procédé de transformation de signaux (6a, 7a, 9a) de structure différente de différents systèmes de tenue de cap (6, 7, 9) pour la commande automatique d'un dispositif de direction (10) dans une machine de travail agricole (1), les systèmes de tenue de cap (6, 7, 9) fonctionnant selon différents principes de fonctionnement, **caractérisé en ce qu'**un ou plusieurs dispositifs de transformation (15) sont intégrés dans le système existant formé des systèmes de tenue de cap (6, 7, 9) et du dispositif de direction (10), auxquels les signaux (6a, 7a, 9a) de structure différente des différents systèmes de tenue de cap (6, 7, 9) sont amenés, les dispositifs de transformation (15) générant à partir de chacun de ces signaux d'entrée (6a, 7a, 9a) de structure différente un signal de sortie homogène (15a) qui est amené au dispositif de direction (10), et un dispositif de transformation étant chaque fois associé à un système de tenue de cap.

2. Procédé selon la revendication 1, **caractérisé en ce que** les signaux d'entrée (6a, 7a, 9a) amenés au dispositif de transformation (15) sont générés par au moins deux systèmes de tenue de cap (6, 7) de structure différente.

3. Procédé selon l'une des revendications 1 ou 2, **caractérisé en ce que** les principes de fonctionnement des systèmes de tenue de cap reposent sur des principes à commande optique, acoustique, visuelle, mécanique, à ultrasons et/ou à infrarouge.

4. Procédé selon l'une des revendications 1 à 3, **caractérisé en ce que** les principes de fonctionnement des systèmes de tenue de cap (6, 7, 9) sont basés sur des principes à commande par laser, par GPS ou mécanique.

5. Dispositif comprenant des dispositifs de transformation pour mettre en oeuvre le procédé selon l'une des revendications 1 à 4, **caractérisé en ce que** les différents systèmes de tenue de cap (6, 7, 9) qui fonctionnent selon différents principes de fonctionnement sont chaque fois associés à un dispositif de transformation (15) qui est intégré dans le système existant formé des systèmes de tenue de cap (6, 7, 9) et du dispositif de direction (10), chaque dispositif de transformation (15) prenant en charge au moins un signal d'entrée de structure différente par rapport au signal de sortie du dispositif de transformation (15), transformant ledit au moins un signal d'entrée de structure différente en un signal de sortie homogène (15a) et transmettant le signal de sortie homogène (15a) à un dispositif de direction (10) déjà existant, le dispositif de direction (10) comprenant le signal d'entrée transformé (15a) comme un signal de direction connu servant de base au dispositif de direction (10).

6. Dispositif selon la revendication 5, **caractérisé en ce qu'**un dispositif de transformation (15) est chaque fois associé aux systèmes de tenue de cap (6, 7, 9) de même principe de fonctionnement.
